# EUROPÄISCHE PATENTANMELDUNG

(11) **EP 0 770 468 A2**
(43) Veröffentlichungstag der Anmeldung: **02.05.1997**
(21) Anmeldenummer: 96112074.8
(22) Anmeldetag: 26.07.1996
(51) Int. Cl.: B29C 45/66, B29C 45/67, B29C 45/17

(54) **Holmlose Zwei-Platten-Spritzgiessmaschine**

(30) Priorität: 26.10.1995 DE 19539752
(71) Anmelder: Ferromatik Milacron Maschinenbau GmbH, D-79364 Malterdingen (DE)
(72) Erfinder: Jaroschek, Christoph, Dr.-Ing., 79346 Endingen (DE); Thoma, Herbert, 79341 Kenzingen (DE); Bourdon, Karl-Heinz, Dr.-Ing., 79276 Reute (DE)
(74) Vertreter: Röther, Peter, Dipl.-Phys.

(57) **Zusammenfassung**

Bei einer holmlosen Zwei-Platten-Spritzgießmaschine mit einer relativ zum Maschinenbett (2) unbeweglichen und einer gegenüber dieser bewegbaren Formaufspannplatte (3,4), einem die bewegbare Formaufspannplatte (4) betätigenden Verfahrmechanismus (24-27), einer Einrichtung (17) zum Schließkraftaufbau und einer Einrichtung zur Kompensation der beim Schließkraftaufbau auftretenden Verformungskräfte ist erfindungsgemäß vorgesehen, daß der Verfahrmechanismus (24-27) und die Einrichtung (17) zum Schließkraftaufbau voneinander entkoppelt sind, wobei die Einrichtung zum Schließkraftaufbau mindestens eine Zugstange (13) aufweist, die sowohl die feststehende als auch die bewegbare Formaufspannplatte unterhalb des Werkzeugeinbauraums (7) durchsetzt, und die an einer der Platten (3) lösbar befestigt ist und an der anderen Platte (4) mittels einer Spannvorrichtung (17), die Schließkraft bewirkend, verriegelbar ist, während die Einrichtung zur Kompensation der Verformungskräfte mindestens ein lösbar an einer Platte (3) befestigter, mit seiner dieser Platte entgegengesetzten Stirnfläche (30) an die gegenüberliegende Platte (4) andrückbarer starrer Abstandhalter (28) ist.

## Beschreibung

Die Erfindung betrifft eine holmlose Zwei-Platten-Spritzgießmaschine mit einer relativ zum Maschinenbett unbeweglichen und einer gegenüber dieser bewegbaren Formaufspannplatte, einem die bewegbare Formaufspannplatte betätigenden Verfahrmechanismus, einer Einrichtung zum Schließkraftaufbau bei Erreichen des Formschlusses und einer Einrichtung zur Kompensation der beim Aufbau der Schließkraft auftretenden, die Plattenparallelität gefährdenden Verformungskräfte.

Bei den bisher üblichen Spritzgießmaschinen ist die feststehende Formaufspannplatte, auch Düsenplatte genannt, über Holme in den vier Eckbereichen dieser Platte mit einer Endplatte, die ebenfalls feststeht, verbunden. Die Holme dienen darüber hinaus als Führung für eine bewegbare Formaufspannplatte, welche mit Hilfe eines sich an der Endplatte abstützenden Antriebsmechanismus relativ zur feststehenden Formaufspannplatte verfahren wird. Die Holme zusammen mit der feststehenden Formaufspannplatte und der Endplatte bilden einen geschlossenen Kraftkreislauf, wodurch zum einen eine gute Führung der verfahrbaren Formaufspannplatte, insbesondere aber eine exakte Plattenparallelität beim Formschluß gewährleistet ist. Nachteil derartiger Maschinen ist, daß durch die störenden Holme im Bereich des Werkzeugeinbauraumes Schwierigkeiten auftreten beim Aufbau bzw. Wechsel eines Werkzeuges, insbesondere eines großformatigen Werkzeuges, bei dem nach außen abstehende Druckmittelzylinder zur Betätigung von Schiebern etc. vorgesehen sind.

Um den Einbauraum frei zugänglich zu gestalten, sind daher in den letzten Jahren mehr und mehr holmlose Spritzgießmaschinen entwickelt worden. Dabei dient zur Aufnahme der beim Schließkraftaufbau auftretenden Kräfte in der Regel ein C-förmiger Rahmen, dessen C-Schenkel die oben angesprochenen feststehenden Formaufspannplatten bzw. Endplatten tragen. Infolge des Fehlens der die Platten miteinander verbindenden Holme tritt beim Schließkraftaufbau eine Durchbiegung des die beiden C-Schenkel verbindenden Teils des C-Rahmens nach oben auf, wodurch die C-Schenkel schräg nach außen wegbewegt werden und somit die Plattenparallelität nicht mehr gegeben ist. Es sind im Stand der Technik bereits einige Lösungsansätze zur Kompensation derartiger Aufbiegungen vorgeschlagen worden, so insbesondere in Form von an den C-Schenkeln lediglich angelenkten Formaufspannplatten, welche unabhängig vom C-Rahmen geführt sind. In jedem Fall ist ein relativ großer Aufwand zu treiben, um die nachteiligen Effekte auszuschalten. Ein weiterer Nachteil derartiger Maschinen ist die große Baulänge und das durch den stabil ausgeführten C-Rahmen bedingte hohe Gewicht der Maschinen.

Aus diesem Grunde ist im Stand der Technik auch bereits vorgeschlagen worden, holmlose Zwei-Platten-Spritzgießmaschinen zu realisieren. Eine derartig ausgestaltete Maschine ist beispielsweise aus der WO 94/17977, insbesondere Fig. 7 bekannt.

Dort ist eine Spritzgießmaschine dargestellt, bei der die bewegbare Formaufspannplatte direkt am bewegbaren Schenkel des Maschinenrahmens angeordnet ist. Die Bewegung erfolgt durch einen Hydraulikzylinder, dessen Kolbenstange an der Innenseite des feststehenden Schenkels des Maschinenrahmens befestigt ist, während der Zylinder an der Außenseite des beweglichen Schenkels sitzt, durch den hindurch die Kolbenstange geführt ist.

Die Hydraulik-Zylinder-Kolbeneinheit hat somit zum einen die Aufgabe, die Formhälften aufeinander zuzufahren und zum anderen bei geschlossenem Formwerkzeug die erforderliche Schließkraft aufzubringen. Zur Kompensation der dabei auftretenden Verformungskräfte des Maschinenrahmens und der damit zusammenhängenden Aufhebung der Plattenparallelität dient ein weiterer Hydraulikzylinder. Dieser Hydraulikzylinder ist unterhalb des Verfahrzylinders angeordnet. Beide Zylinder werden getrennt voneinander gespeist. Eine derartige Ausführungsform einer Zwei-Platten-Spritzgießmaschine hat mehrere Nachteile:

Zunächst einmal ist die Tatsache zu nennen, daß bei einer rein hydraulischen Lösung für den Antrieb der Maschine der Umweltschutzgesichtspunkt nicht ausreichend berücksichtigt wird. Dadurch, daß nicht nur die relativ wenig kraftaufwendige Verfahrbewegung sondern auch der Schließkraftaufbau von ein und demselben Zylinder bewerkstelligt werden muß, ist ein erhebliches Hydraulikölvolumen vonnöten.

Damit zusammenhängend ergibt sich als weiterer Nachteil, daß infolge der Doppelaufgabe des Hydraulikzylinders (Verfahrbewegung-Schließkraftaufbau) ein entsprechend groß dimensionierter Zylinder benötigt wird, wodurch u.a. das Maschinengewicht unnötig erhöht wird. Darüber hinaus wird selbst beim wenig kraftaufwendigen Verfahren der Platte eine unverhältnismäßig große Menge an Druckmittel bewegt, die bei den zwangsläufig immer wieder auftretenden Leckagen bzw. Leitungsbrüchen zu einer nicht zu unterschätzenden Umweltgefahr werden kann.

Ein dritter Nachteil der hydraulischen Lösung liegt im Einsatz eines Hydraulikzylinders für die Kompensation der Rahmenverformung. Hydraulische Systeme sind trotz der relativen Inkompressibilität des Hydrauliköls in sich elastisch, so daß schon eine große Kraft im Kompensationszylinder aufzubringen ist, um die Verformung zu verhindern bzw. ausreichend klein zu halten.

Somit muß auch dieser Zylinder verhältnismäßig groß dimensioniert sein.

Der Erfindung liegt daher die Aufgabe zugrunde, eine Spritzgießmaschine der eingangs genannten Art so auszubilden, daß bei kleinem Baugewicht auf Hydraulik so weit wie möglich verzichtet werden kann.

Die Erfindung löst diese Aufgabe gemäß dem kennzeichnenden Teil des Patentanspruchs 1 dadurch, daß der Verfahrmechanismus und die Einrichtung zum Schließkraftaufbau voneinander entkoppelt sind, wobei die Einrichtung zum Schließkraftaufbau mindestens eine Zugstange aufweist, die sowohl die feststehende als auch die bewegbare Formaufspannplatte unterhalb des Werkzeugeinbauraumes durchsetzt, und die an einer der beiden Platten lösbar befestigt und an der anderen Platte mittels einer Spannvorrichtung, die Schließkraft bewirkend, verriegelbar ist, während die Einrichtung zur Kompensation der Verformungskräfte mindestens ein lösbar an einer Platte befestigter, mit seiner dieser Platte entgegengesetzten Stirnfläche an die gegenüberliegende Platte andrückbarer starrer Abstandhalter ist.

Weitere vorteilhafte Ausführungsformen bzw. Weiterbildungen der Erfindung sind Gegenstand der Unteransprüche.

Das hinter der Erfindung stehende Gesamtkonzept sieht eine Maschine mit kurzer Baulänge, freiem Zugang zum Werkzeugeinbaubereich und weitgehend mechanischem bzw. elektrischem Antriebskonzept vor.

Hierzu bietet sich die an sich bekannte Zwei-Platten-Maschine an.

Da gemäß der Merkmalskombination des kennzeichnenden Teils des Anspruchs 1 die Antriebe für die Plattenbewegung und den Schließkraftaufbau voneinander entkoppelt sind, ist die Möglichkeit gegeben, jeden dieser beiden Antriebe individuell an seine Aufgabe anzupassen.

So ist der Verfahrmechanismus relativ klein auszulegen, da die bewegte Masse (verfahrbare Formaufspannplatte) nicht so groß ist, daß ein hohes Anfahrmoment nötig wäre. Trotzdem ist mit einem derartigen Antrieb eine schnelle Verfahrbewegung zu realisieren, was mit dem großbauenden Hydraulikzylinder im Stand der Technik nicht möglich ist, da dieser zu träge reagiert. Ebenso kann der Antrieb zum Schließkraftaufbau relativ klein bauen, da er die Kraft lediglich auf einem kurzen Weg aufbringen muß.

Übertragen wird die Schließkraft von einer zur anderen Platte ähnlich wie beim Gegenstand der WO 94/17977, Fig. 7, über eine Zugstange, die erfindungsgemäß jedoch nicht die Kolbenstange eines Druckmittelzylinders ist und fest mit der Platte verbunden ist, sondern die beiden Platten durchsetzt, an einer der Platten lösbar befestigt und an der anderen Platte mittels der als Antrieb für den Schließkraftaufbau dienenden Spannvorrichtung ebenfalls lösbar befestigt wird. Die lösbare Befestigung beiderseits bringt den Vorteil mit sich, daß die Maschine schnell auf unterschiedliche Werkzeughöhen eingestellt werden kann, was so ohne weiteres bei der Maschine gemäß Stand der Technik nicht möglich ist.

In Kombination hierzu ist die Einrichtung zur Kompensation der Verformungskräfte mindestens ein lösbar an einer Platte befestigter, mit seiner dieser Platte entgegengesetzten Stirnfläche an die gegenüberliegende Platte andrückbarer starrer Abstandhalter. Dieser Abstandhalter ist in seiner wirksamen Länge jeweils an die wirksame Länge der Zugstange angepaßt, d.h. an die jeweilige Werkzeughöhe. Sie ist so ausgelegt, daß bei geschlossenem Formwerkzeug die Stirnfläche des Abstandhalters beispielsweise an der verfahrbaren Formaufspannplatte anliegt. Wird nun über die Spannvorrichtung die erforderliche Schließkraft aufgebaut, wodurch ein Drehmoment um die Befestigungspunkte der Zugstange an den Platten erzeugt wird, übt der Abstandhalter ein gleich großes aber entgegengesetztes Drehmoment auf die Platten aus, so daß die Plattenparallelität gewährleistet ist.

Im Gegensatz zum Stand der Technik ist der Abstandhalter ein starres Bauelement, was zum einen in konstruktiver Hinsicht eine einfache Lösung ist, auf der anderen Seite den im Stand der Technik auftretenden Nachteil der Systemelastizität vermeidet.

Gemäß den Merkmalen des Patentanspruchs 2 ist vorgesehen, daß die mindestens eine Zustange einen Schaft aufweist, der auf Seiten der Spannvorrichtung zur Ausbildung einer Schulter einen im Durchmesser größeren Endbereich - ähnlich dem Kopf einer Schraube - und im diesem gegenüberliegenden Endbereich ein Außengewinde aufweist, welches mit dem Innengewinde einer sich an der entsprechenden Formaufspannplatte abstützenden Spindelmutter zusammenwirkt, wodurch die lösbare Befestigung verwirklicht ist, während zwischen der gegenüberliegenden Formaufspannplatte und der Schulter der Zugstange die Spannvorrichtung einfahrbar ist.

Dabei ist die Durchführungsöffnung der Zugstange auf Seiten des schraubenkopfartigen Endbereichs der Zugstange im Durchmesser so groß, daß beim Auffahren des Formwerkzeuges, d.h. beim Wegfahren der bewegbaren Formaufspannplatte, der Endbereich nicht mit der Platte kollidiert. Sind die Platten aufeinander zu gefahren, d.h. ist das Formwerkzeug geschlossen, verbleibt zwischen der Schulter des Endbereiches und der Außenfläche der Formaufspannplatte ein gewisser Abstand, in den die Spannvorrichtung einfahrbar ist, wobei die Spannvorrichtung so ausgebildet ist, daß sie versucht, beim Einfahren diesen Abstand zu vergrößern.

Gemäß dem Merkmal des Patentanspruchs 3 eignet sich hierzu besonders gut eine Spannvorrichtung bestehend aus zwei miteinander zusammenwirkenden Keilen, wobei vorzugsweise die Keilschneiden Ausnehmungen aufweisen, die beim Aufeinanderfahren der Keile im Zwischenraum zwischen der Schulter und der Formaufspannplatte den Schaft der Zugstange aufnehmen. Die einander parallelen Flächen der aufeinander gleitenden Keile legen sich dabei einerseits an die Schulter des Zugstangenendbereichs und andererseits an die die Durchführungsöffnung für die Zugstange umgebende Fläche der Formaufspannplatte an. Der Antrieb der Keile kann dabei aus Druckmittelzylindern bestehen, die - im Gegensatz zum Stand der Technik - jedoch mit einem geringen Druckmittelvolumen auskommen. Das um so mehr, als die Keilschrägen so spitzwinklig ansteigend ausgebildet sein können, daß die aufzubringende Kraft (angesichts des kurzen Verspannweges) relativ klein sein kann, wenn nur die Länge der Keile entsprechend groß ist.

Die Befestigung der Zugstange an der entgegenüberliegenden Formaufspannplatte erfolgt, wie im Anspruch 2 ausgeführt, über eine Spindel-Spindelmutter-Verbindung. Das hat neben der schnellen Austauschbarkeit der Zugstange den Vorteil, daß die wirksame Länge derselben schnell auf sich ändernde Werkzeughöhen einstellbar ist.

Die Spindelmutter kann selbstverständlich mit der Formaufspannplatte direkt verbunden sein, sie kann sich aber auch lediglich beim Aufbringen des Schließdrucks an der Formaufspannplatte abstützen.

Vorzugsweise ist gemäß Patentanspruch 4 die Spindelmutter aber als einseitig offenes Gehäuses ausgebildet, in dessen Boden die mit Innengewinde versehene Öffnung für die Zugstange vorgesehen ist und dessen Seitenwände parallel zur Zugstangenachse auf die Formaufspannplatte zu verlaufen, wobei im Gehäuse vorspannbare Federelemente angeordnet sind, die einerseits an der Formaufspannplatte und andererseits am Gehäuseboden angreifen und die Seitenwände des Gehäuses in eine komplementär ausgebildete Ausnehmung in der Formaufspannplatte einfahrbar und zwischen den Seitenwänden des Gehäuses an der Innenwandung der Ausnehmung Dichtungen vorgesehen sind, so daß ein die Zugstange umgebender, mit einem Druckmittel über Ventile füllbarer und entleerbarer Raum gebildet ist.

Die Federn sind dabei so ausgebildet, daß sie das Gehäuse in die komplementäre Ausnehmung hineinziehen wollen. Dem entgegen wirkt der Druck des in den Ringraum eingepressten Druckmittels. Bei geschlossenem Formwerkzeug und zugefahrener Spannvorrichtung, wird durch Beaufschlagung des Ringraums mit dem Druckmittel eine zusätzliche Schließkraftkompomente erzeugt, die das Gehäuse von der Formaufspannplatte gegen die Kraft der Feder abheben will. Somit ist gewährleistet, daß am Ende des Spritzvorgangs durch Drucklosmachung des Ringraumes im Gehäuse die Federn das Gehäuse wieder an die Formaufspannplatte heranziehen und damit auch die Zugstange in axialer Richtung bewegen, so daß die Spannvorrichtung problemlos auseinandergefahren werden kann. Somit dient die Federdruckmittelkombination zum einen dazu, Verklemmungen in der Spannvorrichtung auszuschließen und zum anderen durch den zusätzlichen Druckaufbau im Gehäuse beim Aufbau der benötigten Schließkraft zu helfen. Der Druckmittelzufluß bzw. -abfluß geschieht dabei vorteilhafterweise über ein Wegeventil, wobei die starke Druckbeaufschlagung zum zusätzlichen Schließkraftaufbau über einen separat antreibbaren Hydraulikzylinder erfolgen kann, der eine zusätzliche Druckmittelmenge bei Bedarf in den ringförmigen Hohlraum im Gehäuse einpreßt.

Statt des nach außen abgedichteten Ringraums im Gehäuse kann in demselben auch mindestens ein vorfabriziertes Druckkisen angeordnet sein, wie es der Anspruch 5 vorschlägt. Auch dieses mindestens eine Druckkissen kann darüber hinaus - wie im vorhergehenden Beispiel - von außen mit Druckmittel zusätzlich beaufschlagt werden.

Der starre Abstandhalter ist gemäß Patentanspruch 6 zur lösbaren Befestigung an der Formaufspannplatte teilweise als Spindel ausgebildet, deren Gewinde mit dem Innengewinde einer in der Formaufspannplatte zur Durchführung des Abstandhalterschaftes vorgesehenen Öffnung zusammenwirkt. Auf diese Weise kann durch einfaches Verdrehen des Abstandhalters in der mit Gewinde versehenen Öffnung die wirksame Länge verstellt werden, was bei Werkzeugwechsel und damit verbundener Veränderung der Werkzeughöhe vorgenommen wird.

Dabei ist gemäß Patentanspruch 7 vorgesehen, daß sowohl die Zugstange als auch der Abstandhalter über einen gemeinsamen Antrieb zur synchronen Anpassung an die jeweilige Werkzeughöhe in ihrer wirksamen Länge verstellbar ist. Auf diese Weise ist es möglich, mit "einem Handgriff" sowohl die Zugstange als auch den Abstandhalter in der wirksamen Länge zu verstellen, wenn ein neues Werkzeug eingebaut wird.

In Anbetracht der der Erfindung zugrunde liegenden Aufgabe ist dieser Antrieb vorteilhafterweise gemäß Anspruch 8 ein elektrischer Stellmotor mit einem geeigneten Getriebe, welches die Rotation des Motors in eine synchrone Rotation der Zugstange und des Abstandhalters überträgt.

Die Merkmale des Anspruchs 9 geben eine bevorzugte Ausführungsform des Verfahrmechanismus für die bewege Formaufspannplatte an. Der dort beanspruchte Verfahrmechanismus besteht aus mindestens zwei Zahnstangen, deren Zähne aufeinander zu weisen und zwei dazwischen im konstanten Abstand hintereinander angeordneten, elektromotorisch angetriebenen, mit den Zähnen der Zahnstangen kämmenden Ritzeln, wobei eine der Zahnstangen am Maschinenbett und die andere an der beweglichen Formaufspannplatte befestigt ist.

Dadurch, daß der Motor und die von diesem angetriebenen Ritzeln eine Art Wägelchen bilden, welches auf der unteren Zahnstange um einen Abstand a bewegt wird, wird die obere Zahnstange um den Abstand 2a weiterbewegt. Auf diese Weise ist es möglich, mit einfachen Mitteln eine schnelle Verfahrbewegung für die bewegliche Formaufspannplatte zu realisieren.

Damit die beiden aufeinander zu weisenden Zahnstangen stets parallel zueinander verlaufen, kann das Wägelchen mit die Zahnstangen umfassenden Führungen ausgestattet sein, die einen konstanten Abstand zwischen den Zahnstangen gewährleisten.

Obwohl es denkbar ist, daß der Verfahrmechanismus, die Einrichtung zum Schließkraftaufbau und die Einrichtung zur Kompensation der Verformungskräfte in der Mittellängsebene der Maschine angeordnet sind, ist gemäß Anspruch 10 bevorzugt, daß der Verfahrmechanismus, die Einrichtung zum Schließenkraftaufbau und die Einrichtung zur Kompensation der Verformungskräfte jeweils aus spiegelbildlich zur Maschinenlängsebene angeordneten Bauelementen bestehen. Das heißt, daß auf jeder Seite der Maschine eine Zugstange, ein Zahnstangenpaar und ein Abstandhalter vorgesehen ist.

Um das Gewicht der Maschine weiter zu reduzieren, sieht der Patentanspruch 11 vor, daß die Formaufspannplatten jeweils aus einem Aufspannbereich und zwei parallel zueinander angeordneten, den Aufspannbereich tragenden, zum Maschinenfuß reichenden Trägern bestehen, wobei sowohl die Zugstange(n) als auch der/die Abstandhalter mit den Trägern zusammenwirken.

Im Gegensatz zum Stand der Technik reichen die Platten nicht tafelförmig bis zum Maschinenfuß, so daß bei der erfindungsgemäßen Ausführungsform Gewicht gespart wird. Die Träger weisen dabei die Durchführungen sowohl für die Zugstangen als auch die mit Innengewinde versehene Durchführung für den Abstandhalter auf.

Bei einer bevorzugten Ausführungsform der Erfindung ist gemäß Patentanspruch 12 vorgesehen, daß die Spannvorrichtung im Bereich der bewegbaren Formaufspannplatte und die Spindelbereiche der Zugstange(n) und Abstandhalter im Bereich der feststehenden Formaufspannplatte angeordnet sind.

Die Erfindung wird im folgenden anhand eines Ausführungsbeispieles dargestellt und näher erläutert.

Es zeigen:
- Fig. 1:: schematisch in Seitenansicht eine Spritzgießmaschine mit geschlossenem Formwerkzeug,
- Fig. 2:: Auswerferseitige (links) und düsenseitige Ansicht (rechts) der Maschine gemäß Fig. 1.
- Fig. 3:: Detailausschnitt A aus Fig. 1.

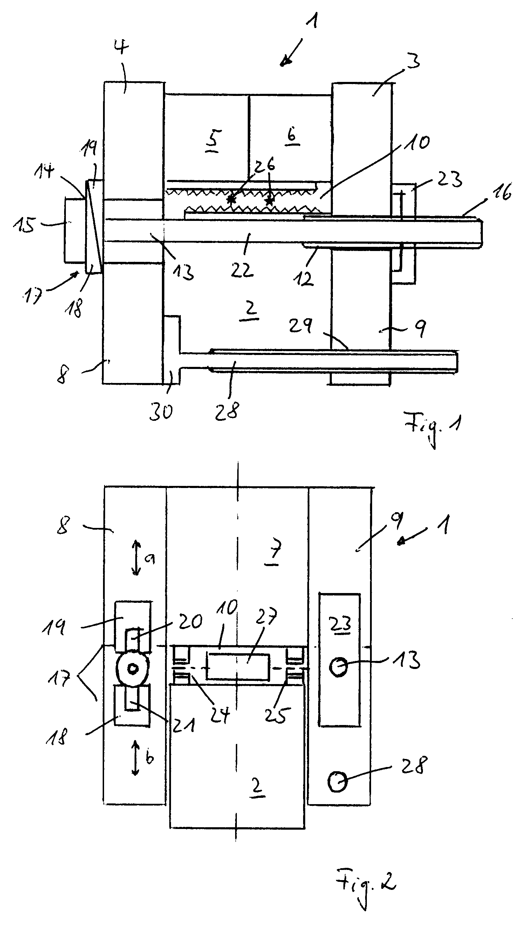

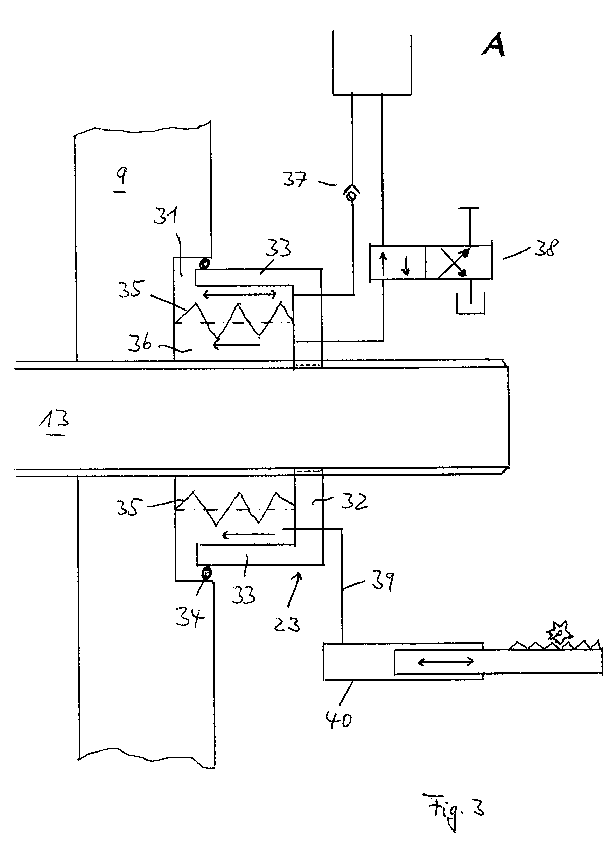

In den Figuren 1 und 2 ist in schematischer Darstellung unter Weglassung aller nicht für die Erfindung wesentlichen Elemente eine holmlose Zwei-Platten-Spritzgießmaschine gezeigt und allgemein mit dem Bezugszeichen 1 versehen.

In der Hauptsache besteht die Maschine 1 aus einem Maschinenbett 2, einer relativ zum Maschinenbett 2 unbeweglichen Formaufspannplatte 3, beispielsweise der Düsenplatte, an die die nicht dargestellte Plastifizier- und Einspritzeinheit anschließt, und einer relativ zur Formaufspannplatte 3 verfahrbaren Formaufspannplatte 4, an die die ebenfalls nicht dargestellte Auswerfereinheit angeschlossen ist.

An der Platte 4 ist die eine Hälfte 5 eines Formwerkzeugs und an der Platte 3 die andere Hälfte 6 des Formwerkzeugs befestigt. In der Fig. 1 ist die Maschine 1 bzw. das Formwerkzeug 5, 6 in der Schließstellung dargestellt.

Wie insbesondere aus der Fig. 2 hervorgeht, sind die Formaufspannplatten 3 und 4 derart aufgebaut, daß der eigentliche Formaufspannbereich 7 von zwei parallel zueinander angeordneten Trägern 8 und 9, die seitlich neben dem Maschinenbett 2 zum Maschinenfuß reichen, wobei dort die Platte 4 auf nicht näher dargestellten Führungen gleitend gelagert ist, getragen wird. Somit verbleibt zwischen der Unterkante des Aufspannbereiches 7 und der Oberseite des Maschinenbetts 2 ein freier Raum 10.

In den Trägern 8, 9 sind Durchführungen 11 und 12 vorgesehen, die sich in etwa in der Höhe des freien Raums 10 befinden.

Die Platten 3 und 4 in den Durchführungen 11 und 12 durchsetetzend sind auf jeder Seite des Maschinenbetts 2 Zugstangen 13 angeordnet. Die Zugstangen 13 sind ähnlich einem Schraubenbolzen ausgebildet, wobei der dem Schraubenkopf entsprechende, eine Schulter 14 bildende Endbereich 15 auf Seiten der beweglichen Formaufspannplatte 4 angeordnet ist, während sich das eine Spindel bildende Gewinde 16 auf Seiten der feststehenden Aufspannplatte 3 befindet.

Da beim Auffahren des Formwerkzeugs 5, 6 die Platte 4 über den Kopf 15 hinaus verfahren werden muß, ist die Durchführung 11 entsprechend dimensioniert.

Zwischen der Schulter 14 des Endbereichs 15 und der gegenüberliegenden Fläche des Trägers 8 verbleibt im Geschlossenzustand des Formwerkzeugs 5, 6 ein Abstand, der von einer Spannvorrichtung 17 besetzt wird. Die Spannvorrichtung 17 besteht aus zwei mit ihren Schrägflächen aufeinanderfahrbaren Keilen 18 und 19, die - wie aus Fig. 2 hervorgeht - in den Keilschneiden jeweils eine Aussparung 20 und 21 aufweisen, in denen beim Zusammenfahren der Keile 18 und 19 der Schaft 22 der Zugstange 13 aufgenommen wird, während sich die einander parallelen, der Schrägen abgewandten Flächen der Keile 18, 19 einerseits an der Schulter 14 des Kopfes 15 und andererseits an der die Durchführung 11 umgebenden Oberfläche des Trägers 8 abstützen. Die senkrecht zur Achse des Schaftes 22 wirkenden Antriebe für die Verfahrbewegung (Pfeile a, b) der Keile 18, 19 sind nicht dargestellt. Vorstellbar sind entsprechend ausgelegte Hydraulikzylinder oder ähnliches.

Der Schaft 22 der Zugstange 13 durchsetzt den Träger 9 der feststehenden Formaufspannplatte 3, wobei das Außengewinde 16 mit dem Innengewinde einer sich an der Formaufspannplatte 3 bzw. der Träger 9 abstützenden Spindelmutter 23 zusammenwirkt. Dieser Bereich, der in der Fig. 1 mit einem Kreis markiert ist, der das Bezugszeichen A trägt, ist in der Fig. 3 detaillierter dargestellt und wird weiter unten noch näher beschrieben.

Der Verfahrmechanismus für die bewegliche Formaufspannplatte 4 besteht aus beiderseits der Maschinenlängsmittelebene angeordneten Zahnstangenpaaren 24, 25. Jedes Zahnstangenpaar 24, 25 besteht aus einer fest auf dem Maschinenbett 2 befestigten Zahnstange. Dieser Zahnstange gegenüber ist eine weitere Zahnstange angeordnet, wobei die Zähne der beiden Zahnstangen aufeinander zuweisen. Die oberhalb der auf dem Maschinenbett angeordneten Zahnstange vorgesehene Zahnstange ist fest an der beweglichen Formaufspannplatte 4 angeordnet. Die sich gegenüberliegenden Zahnstangen weisen einen konstanten Abstand zueinander auf. Mit den Zähnen der sich gegenüberliegenden Zahnstangen der Zahnstangenpaare 24, 25 kämmen jeweils die Zähne zweier in konstantem Abstand hintereinander angeordneter Ritzel 26, die synchron über einen relativ zum Maschinenbett beweglich angeordneten Antriebsmotor (Elektromotor) 27 angetrieben werden. Die aus den Ritzeln 26 und dem Motor 27 bestehende Einheit bildet somit eine Art Wägelchen, welches zwischen den Zahnstangen der beiden Zahnstangenpaare 24, 25 hin- und herverfahrbar ist. Hierdurch ergibt sich, daß bei dem Verfahren des Wagens 26, 27 um eine Strecke c die bewegliche Formaufspannplatte 4 um die Strecke 2c bewegt wird.

Da beim Schließvorgang des Formwerkzeugs 5, 6 und dem anschließenden Verspannen zur Aufbringung der entsprechenden Schließkraft mit Hilfe der Spannvorrichtung 17 ein recht großes Drehmoment auf die Formaufspannplatten 4, 3 um die Verriegelungspunkte der Zugstangen 13 auftreten, was zu einer Aufhebung der Plattenparallelität führen würde, ist unterhalb der Zugstangen 13 auf jeder Maschinenseite ein Abstandhalter 28 vorgesehen, der einerseits in einer mit Innengewinde ausgestatteten Durchführung 29 in der feststehenden Formaufspannplatte 3 lösbar befestigt ist und andererseits mit einem kopfförmigem Endbereich 30 gegen den unteren Bereich des Trägers 8 angedrückt wird. Mit dem Innengewinde in der Durchführung 29 wirkt ein Außengewinde auf dem Schaft des Abstandshalters 28 zusammen. Die spindelförmige Ausbildung sowohl des Abstandhalters 28 als auch der Zugstange 13 hat den Vorteil, daß die Maschine bei einem Werkzeugwechsel schnell auf die entsprechende Werkzeughöhe eingestellt werden kann. Hierzu ist vorgesehen, jedoch nicht dargestellt, daß sowohl die Zugstangen 13 als auch die Abstandhalter 28 über einen gemeinsamen Antrieb verfügen, der sowohl die Zugstangen 13 als auch die Abstandhalter 28 synchron verdreht und damit die wirksame Länge der beiden Elemente einstellt.

In der Fig. 3 ist im Detail der Durchführungsbereich der Zahnstange 13 in der Formaufspannplatte 3 dargestellt. Auf der der Werkzeughälfte 6 abgewandten Seite der Platte 3 bzw. des Trägers 9 ist um die Durchführungsöffnung 12 herum in die Oberfläche des Trägers 9 eine Vertiefung 31 eingefräst.

Die Spindelmutter 23 ist in Form eines zur Vertiefung 31 hin offenen Gehäuses ausgebildet, in dessen Boden 32 die mit Innengewinde versehene Zugstangendurchführungsöffnung vorgesehen ist. Die vom Boden 32 senkrecht aufsteigenden Seitenwände 33 des Gehäuses ragen eine kleine Strecke in die Vertiefung 31 hinein, wobei zwischen der Innenwandung der Vertiefung 31 und der Außenseite der Seitenwände 33 Dichtungselemente 34 angeordnet sind. Zwischen Träger 9 und Boden 32 der Spindelmutter 23 sind rings um die Zugstange 13 Zugfedern 35 angeordnet, die die Spindelmutter 23 und damit auch die Zugstange 13 in Richtung auf den Träger 9 ziehen wollen. Dieser Tendenz entgegen wirkt der Druck eines in den Gehäuseinnenraum 36 eindrückbaren Druckmediums, der bewirkt, daß sich nach Aufbringung der durch die Spannvorrichtung 17 erzeugten Schließkraft die Spindelmutter gegen die Kraft der Federn 35 etwas vom Träger 9 abhebt. Wird am Ende des Spritzvorganges der Druck im Gehäuseinnenraum 36 abgebaut, ziehen die Federn 35 die Spindelmutter 23 wieder an den Trägern 9 heran, wodurch auch die Zugstange 13 um den gleichen kleinen Abstand nach links verschoben wird, so daß die Spannvorrichtung 17 leichter gelöst werden kann.

Wie der Fig. 3 zu entnehmen ist, geschieht die Versorgung (Zufuhr und Entleerung) mit Druckmediums über ein Ventilsystem 37, 38.

Zusätzlich kann über eine Zuleitung 39 mit Hilfe eines beispielsweise zahnstangenbetriebenen Druckmittelzylinders 40, wobei die Zahnstange über ein elektromotorisch angetriebenes Ritzel 41 verfahren wird, Druckmittel in den Gehäuseinnenraum 36 eingedrückt werden, um den Schließkraftaufbau durch die Spannvorrichtung 17 aktiv zu unterstützen.

## Patentansprüche

1. Holmlose Zwei-Platten-Spritzgießmaschine mit einer relativ zum Maschinenbett unbeweglichen und einer gegenüber dieser bewegbaren Formaufspannplatte, einem die bewegbare Formaufspannplatte betätigenden Verfahrmechanismus, einer Einrichtung zum Schließkraftaufbau bei Erreichen des Formschlusses und einer Einrichtung zur Kompensation der beim Aufbau der Schließkraft auftretenden, die Plattenparallelität gefährdenden Verformungskräfte,
dadurch gekennzeichnet,
daß der Verfahrmechanismus (24-27) und die Einrichtung (17,18,19;40) zum Schließkraftaufbau voneinander entkoppelt sind, wobei die Einrichtung (17,18,19) zum Schließkraftaufbau mindestens eine Zugstange (13) aufweist, die sowohl die feststehende (3) als auch die bewegbare Formaufspannplatte (4) unterhalb des Werkzeugeinbauraumes durchsetzt, und die an einer der beiden Platten (3) lösbar befestigt und an der anderen Platte (4) mittels einer Spannvorrichtung (17), die Schließkraft bewirkend, verriegelbar ist, während die Einrichtung zur Kompensation der Verformungskräfte mindestens ein lösbar an einer Platte (3) befestigter, mit seiner dieser Platte entgegengesetzten Stirnfläche (30) an die gegenüberliegende Platte (4) andrückbarer starrer Abstandhalter (28) ist.

2. Holmlose Zwei-Platten-Spritzgießmaschine nach Anspruch 1,
dadurch gekennzeichnet,
daß die mindestens eine Zugstange (13) einen Schaft (22) aufweist, der auf seiten der Spannvorrichtung (17) zur Ausbildung einer Schulter (14) einen im Durchmesser größeren Endbereich (15) und im diesem gegenüberliegenden Endbereich ein Außengewinde (16) aufweist, welches mit dem Innengewinde einer sich an der entsprechenden Formaufspannplatte (3) abstützenden Spindelmutter (23) zusammenwirkt, wodurch die lösbare Befestigung verwirklicht ist, während zwischen der gegenüberliegenden Formaufspannplatte (4) und der Schulter (14) der Zugstange (13) die Spannvorrichtung (17) einfahrbar ist.

3. Holmlose Zwei-Platten-Spritzgießmaschine nach Anspruch 1 oder 2,
dadurch gekennzeichnet,
daß die Spannvorrichtung (17) aus zwei senkrecht zur Zugstangenachse aufeinander zu verfahrbaren Keilen (18,19) besteht, die zum Verspannen mit ihren Schrägflächen aufeinandergleiten, während die den Schrägflächen abgewandten Flächen sich an der Schulter (14) bzw. an der Platte (4) abstützen.

4. Holmlose Zwei-Platten-Spritzgießmaschine nach einem der Ansprüche 1 bis 3,
dadurch gekennzeichnet,
daß die Spindelmutter (23) als einseitig offenes Gehäuse ausgebildet ist, in dessen Boden (32) die mit Innengewinde versehene Öffnung für die Zugstange (13) vorgesehen ist und dessen Seitenwände (33) parallel zur Zugstangenachse auf die Formaufspannplatte (3) zu verlaufen, wobei im Gehäuse vorspannbare Federelemente (35) angeordnet sind, die einerseits an der Formaufspannplatte (3) und andererseits am Gehäuseboden (32) angreifen und daß die Seitenwände (33) des Gehäuses in eine komplementär ausgebildete Ausnehmung (31) in der Formaufspannplatte (3) einfahrbar und zwischen den Seitenwänden der Gehäuse und der Innenwandung der Ausnehmung (31) Dichtungen (34) vorgesehen sind, so daß ein die Zugstange (13) umgebender, mit einem Druckmittel über Ventile (37,38) beaufschlagbarer Raum gebildet ist.

5. Holmlose Zwei-Platten-Spritzgießmaschine nach einem der Ansprüche 1 bis 3,
dadurch gekennzeichnet,
daß im Gehäuse neben den Federelementen (35) mit Druckmittel beaufschlagbare, Druckkissen bildende Hohlkörper angeordnet sind, deren sich gegenüberliegende Stirnseiten sich an der Formaufspannplatte (3) bzw. dem Gehäuseboden (32) abstützen.

6. Holmlose Zwei-Platten-Spritzgießmaschine nach einem der Ansprüche 1 bis 5,
dadurch gekennzeichnet,
daß der mindestens eine Abstandhalter (28) zur lösbaren Befestigung an der Formaufspannplatte (3) teilweise als Spindel ausgebildet ist, deren Gewinde mit dem Innengewinde einer in der Formaufspannplatte (3) zur Durchführung des Abstandhalterschaftes vorgesehenen Öffnung zusammenwirkt.

7. Holmlose Zwei-Platten-Spritzgießmaschine nach einem der Ansprüche 1 bis 6,
dadurch gekennzeichnet,
daß sowohl die Zugstange (13) als auch der Abstandhalter (28) über einen gemeinsamen Antrieb zur synchronen Anpassung an die jeweilige Werkzeughöhe in ihrer wirksamen Länge verstellbar sind.

8. Holmlose Zwei-Platten-Spritzgießmaschine nach Anspruch 7,
dadurch gekennzeichnet,
daß der Antrieb aus einem elektrischen Stellmotor und einem geeigneten Getriebe besteht.

9. Holmlose Zwei-Platten-Spritzgießmaschine nach Anspruch 1 oder einem der Ansprüche 2 bis 8,
dadurch gekennzeichnet,
daß der Verfahrmechanismus aus mindestens zwei Zahnstangen (24,25), deren Zähne aufeinander zuweisen, und zwei dazwischen im konstanten Abstand hintereinander angeordneten, elektromotorisch angetriebenen, mit den Zähnen der Zahnstangen (24,25) kämmenden Ritzeln (26) besteht, wobei eine der Zahnstangen am Maschinenbett (2) und die andere an der beweglichen Formaufspannplatte (4) befestigt ist.

10. Holmlose Zwei-Platten-Spritzgießmaschine nach einem der Ansprüche 1 bis 9,
dadurch gekennzeichnet,
daß der Verfahrmechanismus, die Einrichtung zum Schließkraftaufbau und die Einrichtung zur Kompensation der Verformungskräfte jeweils aus spiegelbildlich zur Maschinenlängsachse angeordneten Bauelementen bestehen.

11. Holmlose Zwei-Platten-Spritzgießmaschine nach einem der Ansprüche 1 bis 10,
dadurch gekennzeichnet,
daß die Formaufspannplatten (3,4) jeweils aus einem Aufspannbereich (7) und zwei parallel zueinander angeordneten, den Aufspannbereich (7) tragenden zum Maschinenfuß reichenden Trägern (8,9) bestehen, wobei sowohl die Zugstange(n) (13) als auch der/die Abstandhalter (28) mit den Trägern (8,9) zusammenwirken.

12. Holmlose Zwei-Platten-Spritzgießmaschine nach einem der Ansprüche 1 bis 11,
dadurch gekennzeichnet,
daß die Spannvorrichtung (17) im Bereich der bewegbaren Formaufspannplatte (4) und die Spindelbereiche der Zugstange(n) (13) und Abstandhalter (28) im Bereich der feststehenden Formaufspannplatte (3) angeordnet sind.
